# EUROPEAN PATENT APPLICATION

(11) **EP 4 374 703 A1**
(43) Date of publication of application: **29.05.2024**
(21) Application number: 23383185.8
(22) Date of filing: 21.11.2023
(51) Int. Cl.: A23B 7/152, A23L 3/3409, A23L 3/3445

(54) **SYSTEM FOR ELIMINATING ETHYLENE FROM AIR IN A CHAMBER FOR CONSERVING FOODSTUFFS**

(30) Priority: 22.11.2022 ES 202231946 U
(71) Applicant: Paniagua Olaechea, Rosalina, 46600 Alzira Valencia (ES)
(72) Inventor: PEREZ PANIAGUA, EDUARDO, 46004 VALENCIA (ES); PEREZ GALAN, MIGUEL ANGEL, 46600 ALZIRA (VALENCIA) (ES)
(74) Representative: Durán-Corretjer, S.L.P.

(57) **Abstract**

System for eliminating ethylene from the air in a chamber for conserving foodstuffs, said system comprising a chamber for conserving foodstuffs and an ozone supply system, wherein the system for eliminating ethylene comprises an ethylene elimination device, said ethylene elimination device comprising an air inlet leading from the chamber, an ozone inlet and an air outlet leading to the chamber, the ethylene elimination device absorbing air from the chamber, mixing said chamber air with the supplied ozone such that the ozone reacts with the ethylene in the air absorbed from the chamber, thereby eliminating the ethylene, and ejecting the mixed air towards the chamber.

## Description

It is common for foodstuffs to be conserved in chambers. Foodstuffs, especially horticultural products such as fruit and vegetables, produce and release ethylene. This ethylene helps to ripen said foodstuffs. Such release means that the air in the chambers contains ethylene. One problem with conserving various foodstuffs in the same place is the release of large quantities of ethylene, which causes said foodstuffs to ripen very quickly, rot and sporulate in the chamber, making it difficult to conserve them.

Furthermore, another problem with ethylene is that it is toxic for humans, which can hinder and prevent operatives from entering the chamber.

It is known to apply chemical products to eliminate ethylene and to disinfect food conservation chambers. In controlled-atmosphere systems, oxygen in the chamber is minimized to enable food to be conserved for long periods of time. These known ethylene destruction systems have a high energy and economic cost and involve introducing chemical additives into the chamber. Moreover, the use of these chemical additives entails a risk of the additives contaminating the conserved products. As a result, products cannot be taken into or out of the chamber during conservation, and all foodstuffs have to be removed before chemicals are used to sanitize the chamber.

It is known to introduce ozone into the chamber to disinfect the chamber by direct contact. Ozone reacts with ethylene and degrades, forming ethylene oxide, which subsequently becomes carbon dioxide and water. One problem with these processes is that ozone is also harmful to humans, and therefore the use of ozone to disinfect and degrade ethylene by direct contact is hazardous to the health of the people working there, which restricts the presence of operatives inside the chamber.

One objective of the present invention is to disclose a system that prolongs the shelf life of the foodstuffs, increasing the conservation time thereof while keeping the atmosphere inside the chamber free from contamination by ethylene and ozone, thereby enabling people to enter the chamber. Another objective of the present invention is to obtain these results without the need to use chemical additives commonly found in the prior art, and to reduce the energy costs of the ethylene degradation systems in the prior art.

In the context of this patent, the term "chamber" refers to any chamber, recipient, facility, store or similar element for conserving and/or storing foodstuffs, food or horticultural products.

The present invention discloses a system for eliminating ethylene from the air in a chamber for conserving foodstuffs. Said system comprises a chamber for conserving food and an ozone supply system, with the particular feature that the system comprises an ethylene elimination device. Said ethylene elimination device comprises an air inlet leading from the chamber, an ozone inlet and an air outlet leading to the chamber, the ethylene elimination device absorbing air from the chamber and mixing said chamber air with the supplied ozone such that the ozone reacts with the ethylene in the air absorbed from the chamber, thereby eliminating the ethylene, and discharging the mixed air into the chamber.

Preferably, the supplied ozone is mixed with the chamber air outside the chamber.

In this mixture, the ozone reacts chemically with the ethylene present in the air in said chamber and degrades it, thereby enabling the total or partial elimination of the ethylene in the air. Eliminating ethylene in this way reduces the toxicity of that air while facilitating conservation of the foodstuffs by delaying and/or preventing ripening. Furthermore, the oxidizing action of the ozone used destroys micro-organisms such as bacteria, viruses, spores, cysts, algae or protozoa, in addition to degrading the ethylene. The reaction of the ozone with the ethylene also hinders the loading of new unwanted chemical residues into the air as a result of the oxygen formation in said reaction.

This system enables ozone to be added to the chamber air without introducing ozone into the chamber by making this mixture inside the ethylene elimination device. Making the mixture in an environment separated from the chamber facilitates maintenance of the different elements of the system, including the device and the conservation chamber itself.

Mixing the ozone and the chamber air separately from the rest of the air in the chamber ensures that there is no ozone inside the chamber, thereby enabling people to enter the conservation chamber at any time. Enabling people to enter the chamber optimizes the space inside said chambers, as well as allowing foodstuffs to be taken into and out of the chamber while eliminating ethylene in the device. Another advantage of the system is that the products can be kept for longer inside the chamber. This enables the products to be removed at any time without having to wait to empty the chamber or to clean the surface of the chamber for removal thereof. An additional advantage of the system according to the invention is reducing the percentage of chemical products applied in the steps following harvesting, eliminating the use of consumables to disinfect the chambers, reducing the labour and products used to clean and disinfect the chambers, reducing contamination of effluent caused by the foregoing, and reducing energy use and costs by enabling sanitizing without chemical residues. By not using chemical products, this system does not generate chemical residues on the surfaces of the fruit, boxes, walls or floors. Furthermore, it increases the shelf life of the products and reduces losses caused by fungal sporulation.

Preferably, the device is arranged inside the chamber. More preferably, the device is arranged in a position raised off the floor of the chamber. This raised position facilitates the ingress of air from the chamber into the apparatus. Preferably, the device is built into the ceiling of the chamber. Alternatively, the device is suspended using cables or in any other known manner. The device can also be arranged anywhere else inside the chamber or outside the chamber. If the device is arranged on the outside, the air inlet leading from the chamber and the air outlet leading to the chamber are arranged so that the chamber air can reach said inlet and said outlet, the ozone and ethylene being mixed in a similar manner outside the chamber.

Preferably, the ethylene elimination device comprises a casing. Said casing comprises the air inlet leading from the chamber, the ozone inlet, and the air outlet leading to the chamber.

In a preferred embodiment, the system comprises an ozone destructor. This ozone destructor eliminates the remaining ozone in the air. More preferably, said ozone destructor is arranged inside the device, at the air outlet leading to the chamber. The system thus enables elimination of the remaining ozone in the air/ozone mixture, from which the ethylene has been eliminated by mixing, before discharge into the chamber. The ozone destructor can be a catalytic ozone destructor. Alternatively, the ozone destructor is a thermal or mixed ozone destructor or any other known type of ozone destructor.

Preferably, the system comprises an air filter. More preferably, said filter is positioned at the air inlet of the chamber. Even more preferably, this filter is a HEPA filter. Alternatively, this filter is a MERV filter. The air filter prevents and/or hinders the ingress of particles into the system.

The device may advantageously comprise a conduit with changes in orientation, direction and/or level to facilitate the deposition of suspended particles from the chamber air. This conduit helps to prevent particles suspended in the chamber air from reaching the ozone destructor, said particles remaining on the walls of the device, thereby facilitating maintenance of the device. Preferably, this conduit is a conduit arranged inside the device. The device may comprise an internal cavity, said internal cavity being arranged inside the device, comprising the air inlet leading from the chamber and the ozone inlet. In this case, the air filter is arranged between the air inlet and the internal cavity. The ozone and the chamber air are injected into this internal cavity, where they are mixed. Preferably, the device comprises a suction device to absorb the chamber air. More preferably, said suction device is arranged behind the air filter, and more preferably arranged in the internal cavity of the casing. This suction device can alternatively be a fan, said fan being arranged so that the air flow generated by the fan is oriented towards the inside of the device. The suction device or fan facilitates mixing of the air coming from the chamber and the ozone coming from the ozone generator. The cohesion of the mixture facilitates movement of the mixture through the conduit.

This device draws air from the chamber and mixes the air with ozone, without the ozone entering the chamber.

In a preferred embodiment, the system comprises a sensor for detecting the ozone concentration. This sensor enables the ozone concentration to be determined. The determined ozone concentration value can be used to regulate the ozone inlet in the device or the quantity of ozone supplied by the ozone supply system. Preferably, said sensor is arranged inside the casing of the device. More preferably, said sensor is arranged inside the device. Preferably, this sensor is arranged in at least one of the following places: air inlet leading from the chamber, internal chamber of the device, conduit of the device, air outlet leading to the chamber, direct air inlet to the conservation chamber. Preferably, said sensor is arranged at the air outlet leading to the chamber of the device. More preferably, said sensor is arranged behind the ozone destructor. Alternatively, said sensor is arranged in an ozone supply pipe. Additionally, the system comprises ozone sensors, moisture sensors, or other known sensors.

Preferably, the system comprises a regulator for regulating the quantity of ozone supplied by the ozone supply system. The system may comprise a regulator for regulating the quantity of ozone entering the device. Preferably, the regulator regulates the quantity of ozone on the basis of the ozone concentration value detected by the sensor. This makes it possible to regulate the ingress of ozone into the chamber so that the ozone level in the chamber is constant. The ingress of ozone into the chamber can also be regulated to ensure that the ozone level in the chamber enables people to enter the chamber safely.

The system can also preferably comprise data transmission means, and more preferably wireless connection means. More preferably, it comprises a screen. These data transmission means enable the system to connect to the Internet, thereby facilitating remote display of the state of the system, enabling performance, statistics or possible anomalies of the system to be analysed, thereby facilitating maintenance thereof. These transmission means also enable regulation of the ingress of ozone into the device to be controlled. Preferably, the system comprises a central computer or processor. Said processor makes it possible to receive signals from the sensors and to regulate the quantity of ozone introduced into the system. Furthermore, this processor enables the direct ingress of ozone into the conservation chamber to be activated or deactivated, along with the suction devices and/or the fans of the system. Such regulation may be automatic or manual. The values determined by the sensor can be compared by the processor with predetermined threshold values to regulate the quantity of ozone generated and introduced into the casing.

Preferably, the ozone supply system is a cold ozone supply system. More preferably, the ozone supply system is arranged outside the chamber. The ozone supply system may comprise an ozone generator, which may preferably be an oxygen-based ozone generator. Preferably, the ozone generator comprises a dry-air supply. Also preferably, the ozone supply system comprises an oxygen concentrator. This oxygen concentrator provides dry air, said oxygen concentrator preferably being the dry-air supply of the generator. This oxygen is circulated by the ozone generator to obtain ozone with enhanced ethylene-degradation properties. Especially preferably, the oxygen concentrator uses oxygen with a purity greater than 90 %, preferably greater than 95 %. Preferably, this oxygen is subjected to high-voltage electrical charges. This increases the movement speed of the air inside the device. The ozone generator can advantageously be a low-energy-consumption ozonization system. Preferably, the ozone generation system comprises an air filter. Also preferably, the ozone generation system comprises an air dryer.

Preferably, the ethylene elimination system comprises an ozone outlet leading from the ozone supply system directly to the chamber without passing through the ethylene elimination device. This ozone outlet leading to the chamber acts as a bypass and enables ozone to be introduced into the chamber additionally and separately from the air outlet leading to the chamber of the device. This bypass enables disinfection of the chamber, and is particularly useful for sanitizing the chamber before the chamber is filled with foodstuffs, in the absence of people and products. This outlet may comprise injection means for injecting the ozone therein at a given pressure and rate. This enables injection of the exact amount of ozone required to correctly sanitize the air in the chambers, said pressure and rate depending on the type of foodstuff and the dimensions of the chamber.

This direct outlet enables the elimination system according to the invention to operate with two different operating modes, firstly enabling the elimination of air containing ethylene from the chamber, mixing said air with ozone without the ozone entering the chamber, and secondly enabling sanitation of the chamber by applying ozone directly inside the chamber, enabling the elimination of viruses, bacteria, moulds, fungi and yeasts from the surfaces of the chambers and cleaning the chamber to enable foodstuffs to be placed in the chamber under optimum hygiene conditions. In this second application, the presence of fans or evaporators inside the chamber helps the ozone to reach the internal surface of the chamber, thereby facilitating the reduction of contamination on the surface of the chamber. This second application provides a space free of surface and environmental contamination before the foodstuffs are placed in the chamber. Preferably, this direct outlet may also comprise a sensor and a regulator. This sensor and regulator may be the same sensors and regulators that monitor access to the device, or may be provided in addition to them.

Preferably, the ethylene elimination system comprises a pipe for supplying ozone to the ozone inlet of the device and/or to the ozone outlet leading directly to the chamber.

The present invention discloses a method for eliminating ethylene from the air in a chamber for conserving foodstuffs, comprising:
- providing an ethylene elimination system as described above,
- absorbing air from the chamber into an ethylene elimination device of the system,
- supplying ozone from the supply system to the device, and mixing said chamber air with the supplied ozone so that the ozone reacts with the ethylene in the air absorbed from the chamber and eliminates the ethylene,
- discharging the mixed air into the chamber through the air outlet leading to the chamber of the device.

Preferably, this method involves drawing air from the chamber into a casing using a suction device. Preferably, this method involves filtering the degraded air using an ozone destructor, before discharging said air into the chamber. Preferably, this method involves regulating the introduced ozone using a regulator, more preferably on the basis of the signal received by a sensor.

For a clearer understanding of the present invention, drawings illustrating an example embodiment of the subject matter of the invention are attached by way of explanatory but non-limiting example.
Figure 1 is a schematic view of an example embodiment of an ethylene elimination system according to the present invention.
Figure 2 is a perspective view of an ethylene elimination device.
Figure 3 is a schematic view of the path travelled by the air in the device in Figure 2.
Figure 4 is a schematic view of the path travelled by the air and the ozone in the top portion of the conduit of the device in Figure 2.
Figure 5 is a schematic view of the path travelled by the air and the ozone in the bottom portion of the conduit of the device in Figure 2.

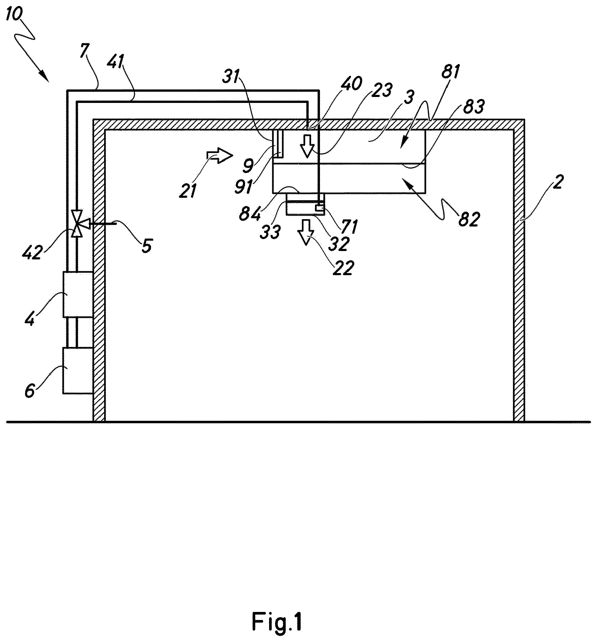

Figure 1 is a schematic view of a system 10 for eliminating ethylene from the air in a chamber 2 for conserving foodstuffs according to a first example embodiment. This system 10 comprises a known chamber 2 for conserving foodstuffs, such as a chamber with refrigerator cabinets and fans, or any type of chamber or station where foodstuffs are stored.

The system 10 comprises an ozone supply system. This supply system comprises an ozone generator 4 arranged outside the chamber. This ozone supply system may also comprise a filter and an air dryer. Figure 1 also shows that the ozone supply system also comprises an oxygen concentrator 6. This oxygen concentrator 6 provides the ozone generator with dry air, for example having an oxygen content of more than 90 %.

The system 10 comprises an ethylene elimination device 3. This device 3 comprises a casing. This device 3 is shown arranged inside the chamber 2. This device 3 comprises an air inlet 31 leading from the chamber, an ozone inlet 40 for introducing the supplied ozone into the device 3, said ozone being transported to said inlet 40 through a supply pipe 41, and an air outlet 32 leading to the chamber, the generated ozone and the chamber air being mixed inside said device 3.

The device 3 also comprises an air filter 9 arranged in the air inlet 31 of the chamber and a suction device 91 or fan operating as a suction device to absorb the air from the chamber 2. This suction device 91 is shown arranged behind the air filter 9. The device 3 comprises a catalytic ozone destructor 33, arranged at the air outlet 32 leading to the chamber, to degrade the remaining ozone in the mixture. This filter 9 and/or this suction device 91 may be arranged inside the device and or the casing thereof.

The system 10 also comprises a sensor 71 for determining the ozone concentration. The system 10 may also comprise a regulator (not shown) for regulating the ingress of ozone into the casing. This sensor 71 is connected to an external processor by a power and data-transmission cable 7. in the figure, the sensor 71 is shown arranged behind the ozone destructor 33, although other arrangements are also possible.

As shown in Figure 1, in the example embodiment shown, the air 21 from the chamber 2 enters via an inlet 31 of the device and passes through the filter 9, the movement of the air 21 being facilitated by the suction device 91. The air is mixed with ozone 23 inside the device. Said ozone 23 is introduced via the ozone inlet 40 of the device 3. inside the device 3, the ozone is mixed with and degrades the ethylene in the air. This mixture passes through an internal conduit 8 of the casing of the device 3, facilitating degradation thereof and the deposition of particles on the walls of the casing of the device 3. This internal conduit 8 is shown split into an internal cavity 80, a top portion 81 and a bottom portion 82 divided by a floor 83 or horizontal partition wall. After passing through the conduit 8, the ozonized air passes through a hole 84 leading to an ozone destructor 33, which degrades all of the residual ozone, the ozone destructor 33 being arranged in the air outlet 32. The air 22 leaving the device is clean and ethylene-free. Continuously repeating this process ensures that the atmosphere in the chamber 2 is purified and ethylene-free, thereby prolonging the shelf life of the products conserved therein.

The system 10 also comprises a direct ozone outlet 5 inside the system for supplying ozone directly into the chamber 2 to sanitize said chamber. This outlet 5 is regulated by a valve 42 arranged in the ozone supply system after the ozone generator 4. Such sanitation is carried out without any foodstuffs inside the chamber.

Although the system in the example shown in Figure 1 comprises a direct ozone outlet 5 (or bypass) leading to the chamber 2, the valve 42 is closed during operation of the device 3, preventing flow through the direct outlet 5.

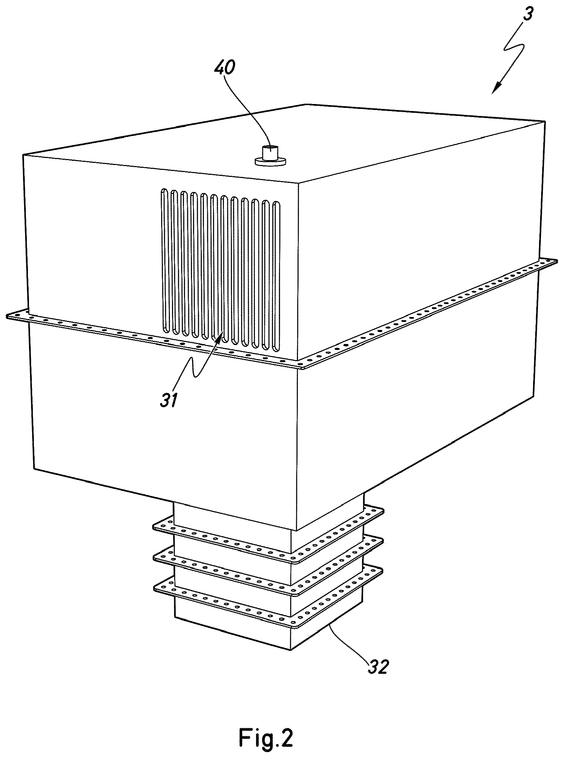

Figure 2 shows the device 3 according to the first example embodiment, showing the air inlet 31 leading from the chamber and the air outlet 32 leading to the chamber. In the examples shown, the device 3 is positioned in the top portion of the chamber. This top position enables the natural convection of the air to be exploited. The device 3 may be arranged in the top portion of the chamber using any known means, including building the casing of the device 3 into the ceiling of the chamber 2 or suspending same from the ceiling of the chamber 2 using cables arranged in the device itself or the casing thereof.

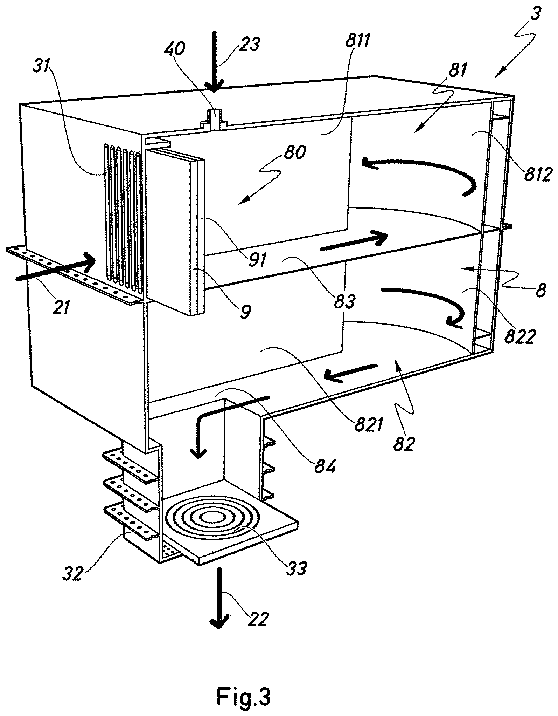

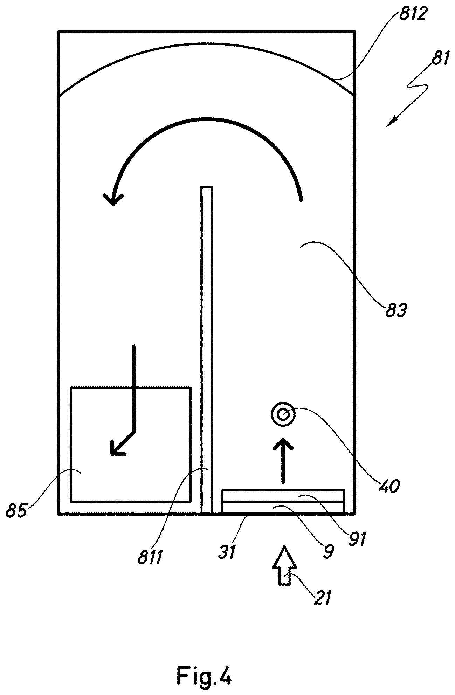

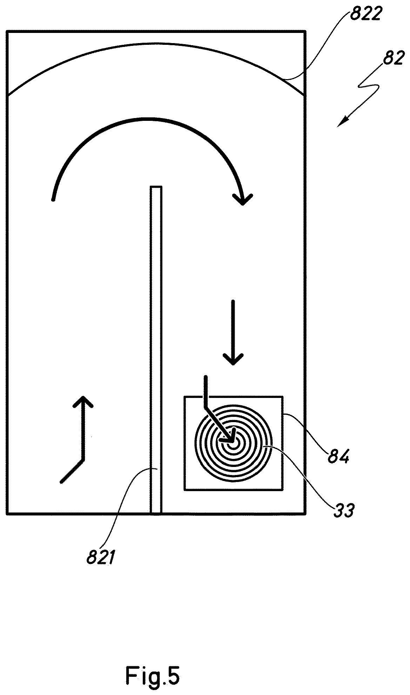

Figures 3, 4 and 5 show the movement of the air through the device 3. Figure 3 is a schematic perspective view showing the device 3 in cross section, while Figures 4 and 5 respectively show the top portion 81 and the bottom portion 82 of the internal conduit 8 of the device 3 and the movement of the air through the conduit 8.

As shown, the absorbed air 21 enters the device 3, and more specifically an internal cavity 80 arranged at the inlet of the device 3, through the inlet 31. After passing through the filter 9 and the suction device 91, the air 21 is mixed with the ozone 23 entering through the ozone inlet 40. This mixture is moved through the inside of the internal conduit 8 of the device. This internal conduit 8 comprises a top portion 81 of the conduit 8 and a bottom portion 82 of the conduit.

Figure 4 shows the movement of the air 21 from the chamber 2 and of the ozone entering through the ozone inlet 40 in the top portion 81 of the conduit 8, comprising the flow of air 21 from the chamber 2 through the filter 9 and the suction device 91 of the inlet 31 of the device 3 located in the internal cavity 80, and the curved wall 812 of the conduit 8 turning the air towards the other side of the vertical wall 811, before said air drops into the bottom portion 82 through the hole 85.

Figure 5 shows the movement of the air coming from the top portion 81 through the hole 85 through the bottom portion 82 of the conduit 8, in which the curved wall 822 turns the air towards the other side of the vertical wall 821, before said air drops through the hole 84 into the ozone destructor 33 and leaves the device 3 through the air outlet 32.

Although the invention has been described and illustrated with reference to a representative example, it will be appreciated that this exemplary embodiment is in no way limiting on the present invention and therefore any of the variants included, directly or as equivalents, within the content of the attached claims must be considered to be included within the scope of the present invention.

## Claims

1. System for eliminating ethylene from the air in a chamber for conserving foodstuffs, said system comprising a chamber for conserving foodstuffs and an ozone supply system,
**characterized in that** the system for eliminating ethylene comprises an ethylene elimination device, said ethylene elimination device comprising an air inlet leading from the chamber, an ozone inlet and an air outlet leading to the chamber, the ethylene elimination device absorbing air from the chamber, mixing said chamber air with the supplied ozone such that the ozone reacts with the ethylene in the air absorbed from the chamber, thereby eliminating the ethylene, and ejecting the mixed air towards the chamber.

2. System according to the preceding claim, **characterized in that** the supplied ozone is mixed with the chamber air outside the chamber.

3. System according to any of the preceding claims, **characterized in that** the ethylene elimination device is arranged inside the chamber.

4. System according to any of the preceding claims, **characterized in that** the device comprises an ozone destructor, said ozone destructor being arranged at the air outlet leading to the chamber from the device.

5. System according to any of the preceding claims, **characterized in that** the device comprises an air filter, said filter being positioned at the air inlet leading from the chamber.

6. System according to any of the preceding claims, **characterized in that** the device comprises a conduit with changes in orientation, direction and/or level to facilitate the deposition of suspended particles from the chamber air.

7. System according to any of the preceding claims, **characterized in that** the device comprises a suction device to absorb the air from the chamber.

8. System according to any of the preceding claims, **characterized in that** it comprises a sensor for detecting the ozone concentration.

9. System according to Claims 4 and 8, **characterized in that** the sensor is arranged behind the ozone destructor.

10. System according to either of Claims 8 and 9, **characterized in that** the system comprises a regulator to regulate the quantity of ozone introduced into the device as a function of the ozone measurement taken by the sensor.

11. System according to any of the preceding claims, **characterized in that** it comprises an ozone inlet leading from the ozone supply system directly to the chamber without passing through the ethylene elimination device.

12. System according to any of the preceding claims, **characterized in that** the chamber is a chamber for conserving horticultural products.

13. System according to any of the preceding claims, **characterized in that** the device is arranged in the top portion of the chamber.

14. Device for eliminating ethylene in a system for eliminating ethylene from the air in a chamber for conserving foodstuffs according to any of the preceding claims, said ethylene elimination device comprising an air inlet leading from the chamber, an ozone inlet and an air outlet leading to the chamber, the ethylene elimination device absorbing air from the chamber and mixing said chamber air with the supplied ozone such that the ozone reacts with the ethylene in the air absorbed from the chamber, thereby eliminating the ethylene.
